# EUROPEAN PATENT APPLICATION

(11) **EP 4 597 220 A1**
(43) Date of publication of application: **06.08.2025**
(21) Application number: 23869489.7
(22) Date of filing: 16.03.2023
(51) Int. Cl.: G03B 21/20, G02B 26/00, H04N 9/31, G03B 21/00

(54) **PROJECTION LIGHTING DEVICE AND PROJECTION APPARATUS**

(30) Priority: 30.09.2022 CN 202211215875
(71) Applicant: Shenzhen Roborock Innovation Technology Co., Ltd., Shenzhen, Guangdong 518000 (CN)
(72) Inventor: ZHANG, Jinwang, Shenzhen, Guangdong 518000 (CN)
(74) Representative: Studio Torta S.p.A.
(86) International application number: PCT/CN2023/081963
(87) International publication number: WO 2024/066228

(57) **Abstract**

A projection lighting device and a projection apparatus. The projection lighting device comprises a first light source assembly (100), a time-based dimming assembly (110), a light guide assembly (130), and a fluorescence generation assembly (140); the first light source assembly (100) is used for providing first primary color light; the time-based dimming assembly (110) is used for, in a first illumination time period, enabling the first primary color light to be output as an illumination beam, and in a second illumination time period, enabling the first primary color light to be transmitted to the light guide assembly (130); the light guide assembly (130) comprises a reflection element (131) used for reflecting the incident first primary color light to the fluorescence generation assembly (140); the fluorescence generation assembly (140) is used for outputting second primary color light under the excitation of the first primary color light.

## Description

### CROSS-REFERENCE TO RELATED APPLICATION

The present application is based on and claims priority to Chinese Patent Application No. 202211215875.4, filed on September 30, 2022, the entire content of which is incorporated herein by reference.

### TECHNICAL FIELD

The present disclosure relates to a projection illumination apparatus and a projection device.

### BACKGROUND ART

As projection devices are more and more widely used in people's work and life, requirements for the performance and performance-price ratio of the projection devices are also constantly improving. As one of components of the projection device, an illumination system needs to output illumination light beams of three primary colors for projection, which have a great impact on the cost and performance of the projection device, such as brightness, color gamut, color saturation and contrast. Therefore, increasing the light energy utilization rate of the illumination system has become one of ways to improve the performance-price ratio of the projection device.

### SUMMARY OF THE INVENTION

In a first aspect, embodiments of the present disclosure provide a projection illumination apparatus. The projection illumination apparatus includes a first light source assembly, a time-sharing dimming assembly, a light guide assembly and a fluorescence generation assembly, wherein
the first light source assembly is configured to provide first primary light;
the time-sharing dimming assembly is configured to output the first primary light as an illumination light beam in a first illumination time period and transmit the first primary light to the light guide assembly in a second illumination time period, the first illumination time period and the second illumination time period being different time periods;
the light guide assembly includes a reflecting element configured to reflect incident first primary light to the fluorescence generation assembly; and
the fluorescence generation assembly is configured to output second primary light under excitation of the first primary light.

In a second aspect, embodiments of the present disclosure provide a projection device. The projection device includes a light valve, a projection lens and the projection illumination apparatus provided in the first aspect, wherein the first primary light, the second primary light and third primary light output by the projection illumination apparatus irradiate on a screen through the light valve and the projection lens to display a color image.

The above description is only an overview of the technical solutions provided by the present disclosure. In order to understand the technical means of the present disclosure more clearly, it can be implemented according to the content of the description. In addition, in order to make the above-mentioned and other features and effects of the present disclosure more clearly understood, the specific implementations of the present disclosure are given below.

### BRIEF DESCRIPTION OF THE DRAWINGS

FIG. 1 is a schematic structural diagram of a projection device in an embodiment of the present disclosure;
FIG. 2 is a schematic structural diagram I of a projection light source apparatus in an embodiment of the present disclosure;
FIG. 3 is a schematic diagram of light transmission when a dimming element is located at a first preset position in an embodiment of the present disclosure;
FIG. 4 is a schematic diagram of light transmission when a light dimming element is located at a second preset position in an embodiment of the present disclosure;
FIG. 5 is a schematic diagram of region division of a rotary dimming wheel in an embodiment of the present disclosure;
FIG. 6 is a schematic structural diagram II of the projection light source apparatus in an embodiment of the present disclosure;
FIG. 7 is a control sequence diagram of a projection light source apparatus in an embodiment of the present disclosure; and
FIG. 8 is a schematic structural diagram III of a projection light source apparatus in an embodiment of the present disclosure.

### DETAILED DESCRIPTION

The exemplary embodiments of the present disclosure are described in detail below with reference to the accompanying drawings. It should be pointed out that in the accompanying drawings, for clarity of the illustration, the dimensions of elements may be scaled up. Although the exemplary embodiments of the present disclosure are shown in the drawings, it should be understood that the present disclosure may be implemented in various forms and should not be limited by the embodiments described herein. On the contrary, these embodiments are provided in order to be able to understand the present disclosure more thoroughly, and to be able to fully communicate the scope of the present disclosure to those skilled in the art. The term "a plurality of" includes a case where there are two or more. The terms "first", "second", "third", etc., are used only as markers, and are not intended to limit the quantity of objects and their precedence relationship. It should be noted that in an optical path shown in the accompanying drawings, a light beam represented by a solid line is first primary light, a light beam represented by a double-dot line is second primary light, and a light beam represented by a dotted line is third primary light.

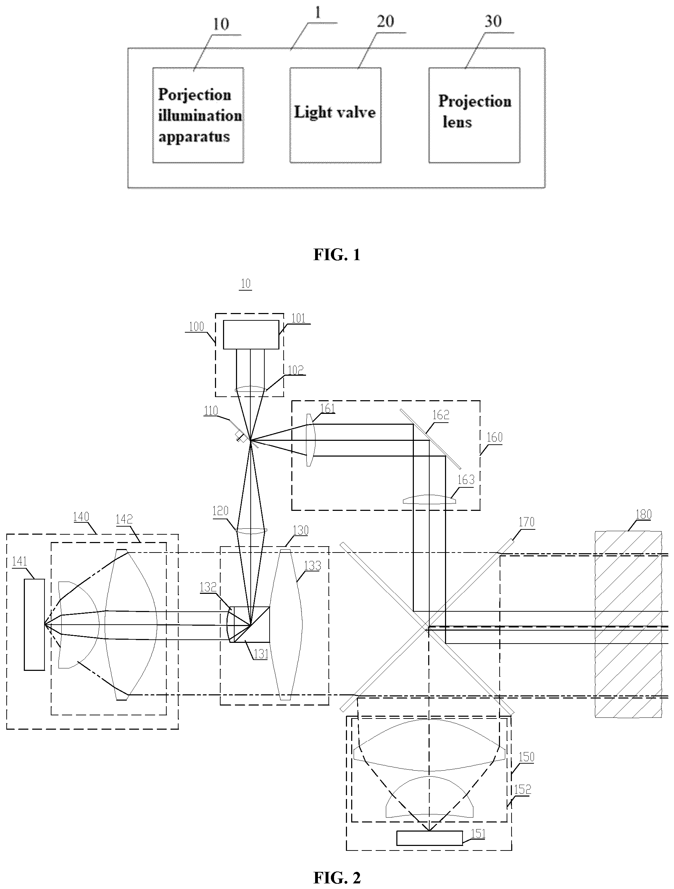

Embodiments of the present disclosure provide a projection illumination apparatus and a projection device. The projection illumination apparatus may be applied to the projection device as a projection light source. As shown in FIG. 1, the projection device 1 includes a projection illumination apparatus 10, a light valve 20 and a projection lens 30. Light of three primary colors, i.e., red, green and blue output by the projection illumination apparatus 10 are processed by the light valve 20, and then irradiate on a screen through the projection lens 30, to display a color image. For example, the light valve 20 may be an LCD (Liquid Crystal Display, liquid crystal display) light valve, a DMD ( Digital Micromirror Device, digital micromirror device) light valve or an LCOS (Liquid Crystal on Silicon, liquid crystal on silicon) light valve, etc., which will not be limited in this embodiment. For example, the projection device 1 may be a projection device based on a single light valve, or a projection device based on dual light valves, or a projection device based on three light valves, which will not be limited in this embodiment.

As shown in FIG. 2, the projection illumination apparatus 10 provided by this embodiment of the present disclosure may include a first light source assembly 100, a time-sharing dimming assembly 110, a light guide assembly 130, a fluorescence generation assembly 140 and a second light source assembly 150. The time-sharing dimming assembly 110 is configured to split the first primary light provided by the first light source assembly 100 in a time-sharing manner, so that it not only can be directly output as an illumination light beam, but also used as pump light that excites the second primary light.

The first light source assembly 100 is configured to provide the first primary light. For example, the first light source assembly 100 may include a laser source 101 or an LED light source, and specifically, may be a laser diode array, a single laser diode, an LED light source array or a single LED light source.

In some embodiments, the first light source assembly 100 not only provides the first primary light for projection illumination, but also acts as a pump light source for the fluorescence generation assembly 140. In one embodiment, a fluorescent substance is excited by the first light source assembly 100 to generate the second primary light. Exemplarily, the laser light source 101 may be a blue laser light source. That is, the first primary light is blue laser. With the development of an EEL (Edge Emitting Laser, edge emitting laser) technology, high-power blue semiconductor lasers have relatively high conversion efficiency and have been produced on a large scale, so their cost is usually relatively low. A blue laser light source is typically used for this assembly.

Further, the first light source assembly 100 may further include a first focusing lens 102. The first focusing lens 102 is disposed on a light transmission path between the laser light source 101 and the time-sharing dimming assembly 110, and configured to converge the first primary light output by the laser light source 101, so as to reduce a beam diameter of the first primary light.

In some embodiments, the time-sharing dimming assembly 110 may be disposed near a focal point of the first focusing lens 102. In this way, spots of light that is focused by the first focusing lens 102 on the time-sharing dimming assembly 110 are relatively small, so that the dimension of the time-sharing dimming assembly 110 can be effectively reduced, thereby reducing a space occupied by the time-sharing dimming assembly 110 and also facilitating synchronous control over the time-sharing dimming assembly 110 and the light valve 20. In addition, transition bands for the first primary light and the second primary light shown by the projection illumination apparatus 10 can also be reduced, thereby shortening the time spent in turning off the projection illumination apparatus 10 and improving the projection efficiency.

The time-sharing dimming assembly 110 is configured to split the first primary light provided by the first light source assembly 100 in a time-sharing manner, i.e., output the first primary light provided by the first light source assembly 100 as an illumination light beam in a first illumination time period and transmit the first primary light provided by the first light source assembly 100 to the light guide assembly 130 in a second illumination time period as pump light of the fluorescence generation assembly 140. That is, by disposing the time-sharing dimming assembly 110, the first primary light provided by the same first light source assembly 100 may be directly output as an illumination light beam, or used as pump light that excites the second primary light. In this way, the laser utilization rate in the projection illumination apparatus 10 can be effectively increased, and the unit brightness cost is reduced while the brightness, color gamut, color saturation, contrast and other performance of a projection picture are ensured, thereby increasing the performance-price ratio of the projection illumination apparatus 10. Meanwhile, the problem in the related art that a light source system needs to use a red light source, a blue light source and a green light source at the same time is also avoided.

It should be noted that the first illumination time period and the second illumination time period are different time periods, which are determined according to proportions of the illumination time of the first primary light and the illumination time of the second primary light in a scanning cycle for each frame of image scanned. In this way, by synchronizing a control sequence of the time-sharing dimming assembly 110 and a driving sequence of the light valve 20 such as a DMD or an LCOS panel, the first primary light and the second primary light may be output to the light valve 20 in a time-sharing manner to achieve color display in different sequences.

In some embodiments, the time-sharing dimming assembly 110 may include an optical path selection element and a driving mechanism.

The driving mechanism controls the movement of the optical path selection element, so that the first primary light selectively transmits through the optical path selection element or is reflected by the optical path selection element, thereby achieving the above-mentioned time-sharing light-splitting function. There are various implementations, two of which are mainly listed for illustration. It should be noted that in other embodiments, other applicable implementations may also be adopted, which will not be limited in this embodiment.

In the first implementation, the optical path selection element may be a dimming element 111, and the driving mechanism is connected to the dimming element 111 and configured to drive the dimming element 111 to deflect. When the dimming element 111 is deflected to a first preset position, the first primary light provided by the first light source assembly 100 is totally reflected by the dimming element 111 and then output as an illumination light beam. When the dimming element 111 is deflected to a second preset position, the first primary light provided by the first light source assembly 100 is transmitted to the light guide assembly 130 through the dimming element 111 so as to be further guided to the fluorescence generation assembly 140.

For example, the driving mechanism may be a mechanical driving mechanism such as a motor, an electrostatic driving mechanism, an electromagnetic driving mechanism, a piezoelectric driving mechanism or a thermoelectric driving mechanism, etc., which will not be limited in this embodiment. A deflection angle of the dimming element 111 may be controlled by controlling the driving mechanism, so that the dimming element 111 can be alternately deflected to the first preset position and the second preset position. The first preset position and the second preset position are predetermined according to an actual optical path.

A refractive index of a material for the dimming element 111 is greater than that of air. For example, the material for the dimming element 111 may be silicon, or a material with a high refractive index, such as lanthanide series glass. The first primary light provided by the first light source assembly 100 enters the dimming element 111 from a front surface of the dimming element 111, and then exits into air from a rear surface of the dimming element 111. The front surface and the rear surface are two opposite surfaces of the dimming element 111, and the rear surface is a surface away from the first light source assembly 100. Because the rear surface of the dimming element 111 is an interface of light from an optically denser medium to an optically thinner medium, total reflection occurs when an incident angle α of the first primary light on the rear surface of the dimming element 111 is greater than a critical angle θ of total reflection. The critical angle θ of total reflection may be calculated from the refractive index of the air and the refractive index of the material for the dimming element 111. Therefore, the first preset position is a position where the incident angle α of the first primary light on the rear surface of the dimming element 111 is greater than the critical angle θ of total reflection and less than 90 degrees, and the second preset position is a position where the incident angle α of the first primary light on the rear surface of the dimming element 111 is greater than or equal to 0 degree and less than the critical angle θ of total reflection.

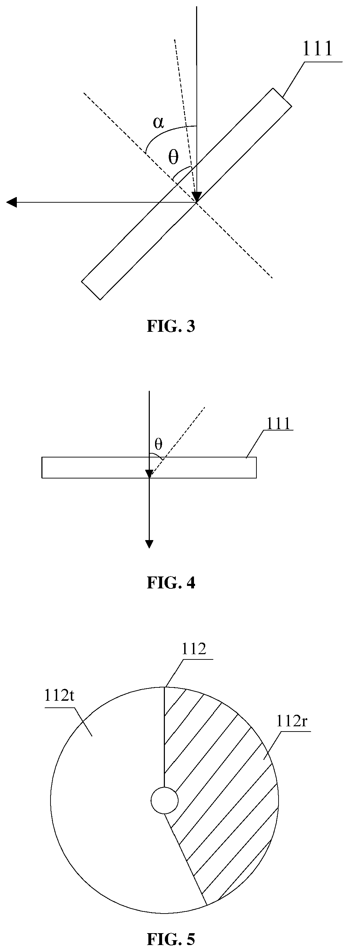

As shown in FIG. 3, when the dimming element 111 is located at the first preset position, because the incident angle α of the first primary light is greater than the critical angle θ of total reflection, the first primary light is totally reflected on the rear surface of the dimming element 111, thereby changing a transmission direction of the first primary light and causing the first primary light to be output as the illumination light beam. As shown in FIG. 4, when the dimming element 111 is located at the second preset position, a total reflection condition is not satisfied, and the first primary light may be continuously transmitted to the light guide assembly 130 through the dimming element 111, and then transmitted to the fluorescence generation assembly 140 through the light guide assembly 130.

During use, the first preset position and the second preset position may be set according to an actual optical path direction and the amplitude of deflection of the dimming element 111 that can be driven by the driving mechanism. For example, in order to minimize the deflection amplitude of the dimming element 111, the first preset position and the second preset position may be set as close to a position where the critical angle θ of total reflection is achieved as possible. For example, if the critical angle θ of total reflection is 35 degrees, the first preset position may be a position where the incident angle α is 40 or 45 degrees, and the second preset position may be a position where the incident angle α is 0 degree, 5 degrees, 10 degrees, or 20 degrees. It should be noted that the second preset position shown in FIG. 4, i.e., the position where the incident angle α is 0 degree, is only illustrative and is not used as a limitation.

Further, in order to increase the utilization rate of the first primary light, an anti-reflection film (AR film) may also be disposed on each of upper and lower surfaces of the dimming element 111.

In the second implementation, the optical path selection element may be a rotary dimming wheel 112. As shown in FIG. 5, the rotary dimming wheel 112 has a transmission region 112t and a reflection region 112r. During use, the rotary dimming wheel 112 may be controlled to rotate, and then, the positions of the transmission region 112t and the reflection region 112r will change with the rotation of the rotary dimming wheel 112, and the transmission region 112t and the reflection region 112r rotate alternately to an incident position of the first primary light provided by the first light source assembly 100, thereby achieving the above-mentioned time-sharing light-splitting function. When the reflection region 112r of the rotary dimming wheel 112 rotates to the incident position of the first primary light, the first primary light provided by the first light source assembly 100 is reflected by the reflection region 112r and output as an illumination light beam. When the transmission region 112t of the rotary dimming wheel 112 rotates to the incident position of the first primary light, the first primary light provided by the first light source assembly 100 is continuously transmitted to the light guide assembly 130 through the transmission region 112t, so as to be further transmitted by the light guide assembly 130 to the fluorescence generation assembly 140.

For example, segmented film-coating may be performed on a substrate of the rotary dimming wheel 112, so that the rotary dimming wheel 112 has the transmission region 112t allowing the first primary light to transmit through and the reflection region 112r capable of reflecting the first primary light. It should be noted that the dimensions and dimension scales of the transmission region 112t and the reflection region 112r shown in FIG. 5 are for illustration only and are not used as limitations. The actual dimensions and scales of the transmission region 112t and the reflection region 112r are related to a dimension of a spot of the first primary light irradiating on the rotary dimming wheel 112, a ratio of a duration of the first illumination time period to a duration of the second illumination time period, and a rotation rate.

The light guide assembly 130 is used for realizing the guidance of pump light, i.e., excitation light, and the guidance of excited second primary light. The light guide assembly 130 may include a reflecting element 131. The reflecting element 131 is configured to reflect the first primary light, which is incident through the time-sharing dimming assembly 110, to the fluorescence generation assembly 140. The fluorescence generation assembly 140 is configured to output the second primary light under the excitation of the incident first primary light, and output a part of the second primary light, which is not occluded by the reflecting element 131, as an illumination light beam in the second illumination time period.

As shown in FIG. 2, the reflecting element 131 is located in a light field of the second primary light output by the fluorescence generation assembly 140, and the dimension of the reflecting element 131 is smaller than a beam diameter of the second primary light output by the fluorescence generation assembly 140, so that a part of the second primary light can be transmitted from a path other than the reflecting element 131 so as to be further output as an illumination light beam. For example, the reflecting element 131 may be a reflecting prism for ease of assembly.

An occlusion proportion of the second primary light by the reflecting element 131 is related to the dimension of the reflecting element 131, and the smaller the dimension of the reflecting element 131 is, the smaller the occlusion proportion is. Therefore, in some embodiments, the projection illumination apparatus 10 provided by the embodiment of the present disclosure further includes a second focusing lens 120, wherein the second focusing lens 120 is disposed on a transmission path of the first primary light between the time-sharing dimming assembly 110 and the reflecting element 131, and configured to focus the first primary light transmitted from the time-sharing dimming assembly 110 to the reflecting element 131 onto a reflecting surface of the reflecting element 131. For example, the reflecting surface of the reflecting element 131 may be disposed near a focal point of the second focusing lens 120. This facilitates reducing the dimension of a spot of the first primary light on the reflecting surface. Correspondingly, the dimension of the reflecting element 131 and the occlusion proportion can be reduced, and the proportion of the second primary light as the illumination light beam can be increased, thereby facilitating improving the display brightness of the projection device.

In some embodiments, since the first primary light reflected by the reflecting element 131 is divergent, in order to control the energy density of the first primary light transmitted to the fluorescence generation assembly 140, the light guide assembly 130 may also include a first collimating lens 132 disposed on a transmission path of the first primary light between the reflecting element 131 and the fluorescence generation assembly 140. The first primary light reflected by the reflecting element 131 is transmitted to the fluorescence generation assembly 140 after being collimated by the first collimating lens 132.

An aperture of the first collimating lens 132 is adapted to the dimension of the reflecting element 131. By taking the reflecting element 131 being a reflecting prism as an example, the reflecting prism includes a first surface and a second surface which are opposite to each other, wherein the first surface is a reflecting light-exit surface. That is, the first primary light reflected by the reflecting prism exits from the first surface to the fluorescence generation assembly 140. For example, the first collimating lens 132 may be glued on the first surface, which facilitates the assembly and also reduces the dimension of the first collimating lens 132. For example, the dimension of the first collimating lens 132 may be less than or equal to the dimension of the first surface so as to minimize an occlusion proportion of the second primary light output by the fluorescence generation assembly 140 by the entire light guide assembly 130.

In some embodiments, the fluorescence generation assembly 140 may include a fluorescence collimating lens group 142 and a fluorescence generator 141. The fluorescence collimating lens group 142 may be configured to converge the incident first primary light to the fluorescence generator 141, so as to improve the energy density of excitation light and reduce the beam diameter of the excitation light, thereby not only facilitating reducing the dimension of the fluorescence generator 141, but also collimating the second primary light generated by the fluorescence generator 141 under the excitation of the first primary light. For example, the fluorescence collimating lens group 142 may be configured according to collimation and convergence requirements of an actual optical path, may be a single lens, or may be a combination of a plurality of lenses, for example, including a first lens and a second lens.

Because the fluorescence generated by the fluorescence generator 141 under excitation is divergent in all directions, and a light exit angle is relatively large, a beam diameter of the second primary light collimated by the fluorescence collimating lens group 142 is also greater than an aperture of the first collimating lens 132. In this way, a part of the second primary light cannot be occluded by the light guide assembly 130 and exits as an illumination light beam in the second illumination time period.

For example, in the case that the first primary light is blue laser, the second primary light may be green light. That is, the fluorescence generator 141 is configured to generate green fluorescence under the excitation of blue light. For example, the fluorescence generator 141 may be static green ceramic fluorophor, or an omnidirectional green fluorescence wheel, etc., which is not specifically limited here. Because the fluorescence generator 141 can generate the second primary light under the action of excitation light, there is no need to additionally dispose a color wheel module for filtering, nor does the fluorescence generator 141 need to be partitioned, so the synchronization of the fluorescence generator 141 and the color wheel module is also not considered, thereby effectively reducing the synchronization control requirement, being prone to control and heat dissipation, and facilitating reducing the cost of the projection illumination apparatus 10.

In some embodiments, the light guide assembly 130 may further include a second collimating lens 133. The second collimating lens 133 is disposed on a side of the reflecting element 131 away from the fluorescence generation assembly 140. The aperture of the second collimating lens 133 is adapted to the beam diameter of the second primary light output by the fluorescence generation assembly 140, so that the second primary light, which is not occluded by the reflecting element 131, i.e., the second primary light output as an illumination light beam, may be incident on the second collimating lens 133, and output after being collimated by the second collimating lens 133.

By still taking the reflecting element 131 being the reflecting prism as an example, the second collimating lens 133 may be glued on the second surface of the reflecting prism. The second collimating lens 133 may be configured to, on the one hand, bear a reflecting prism having a small dimension and the first collimating lens 132 so as to facilitate the assembly, and on the other hand, collimate the second primary light output as the illumination light beam in cooperation with the fluorescence collimating lens group 142, so as to compensate for an off-axis amount, reduce the off-axis light energy loss, and increase the light yield of the second primary light.

It should be noted that in some embodiments, the second collimating lens 133 may also be replaced with a transparent flat plate, which bears a reflecting prism with a small dimension and the first collimating lens 132, thereby facilitating the assembly. Further, it is also possible to coat a light incident side surface and a light exit side surface of the transparent flat plate with anti-reflection films to increase the light yield of the second primary light.

Compared with a mode of adopting a beam splitting mirror to guide pump light and the second primary light generated under excitation, film coating of an optical element in the light guide assembly 130 is simpler, which is conducive to reducing the cost of the projection illumination apparatus 10.

The second light source assembly 150 is configured to provide third primary light so as to be output as an illumination light beam. In some embodiments, the second light source assembly 150 may include a light source 151 configured to generate the third primary light. The light source 151 may be an LED light source, a laser light source, or a mixed light source, etc. For example, in the case where the first primary light is blue laser and the second primary light is green light, the third primary light is red light. Correspondingly, the light source 151 may a red LED light source or a red laser light source, which may output red light without wavelength conversion and color filtering, thereby facilitating increasing the light energy utilization rate.

By taking the light source 151 being the LED light source as an example, in order to increase the utilization rate of the third primary light, the second light source assembly 150 may further include an LED collimating lens group 152 disposed on a light exit side of the LED light source, so that the third primary light generated by the LED light source is collimated through the LED collimating lens group 152 and exits as a projection illumination light beam. The LED collimating lens group 152 may be configured according to a collimation requirement of an actual optical path, or may be a single lens, or may be a combination of a plurality of lenses, for example, including a third lens and a fourth lens as shown in FIG. 2.

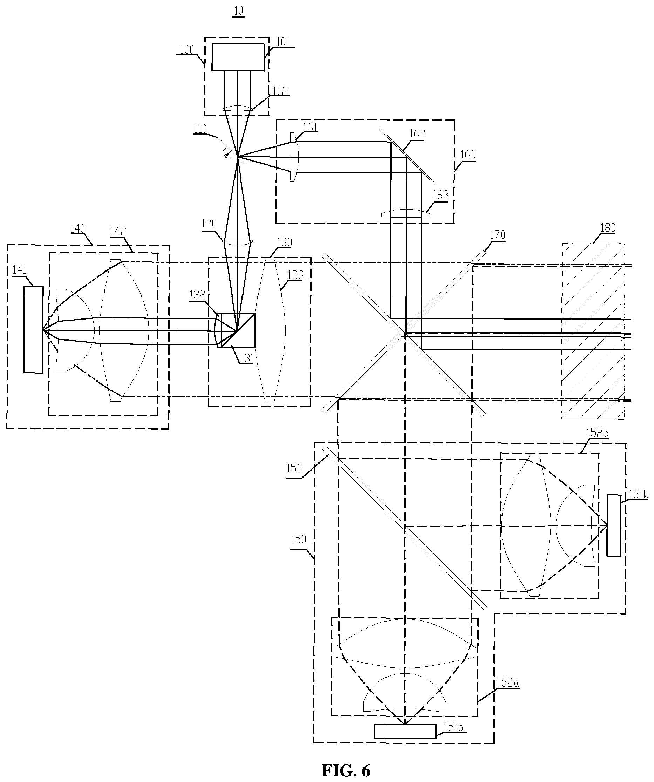

Further, considering that the brightness of light emitted by the LED light source is weaker than brightness of light emitted by the laser light source 101, in order to improve the brightness of the third primary light output by the projection illumination apparatus 10, as shown in FIG. 6, the second light source assembly 150 may include a dual-wavelength LED light source combination, that is, includes a first LED light source 151a and a second LED light source 151b, wherein the first LED light source 151a and the second LED light source 151b are configured to emit third primary light of different wavelengths. By taking the third primary light being red light as an example, the first LED light source 151a may be a red LED light source with a wavelength of 612 nm, and the second LED light source 151b may be a red LED light source with a wavelength of 650 nm.

At this time, the second light source assembly 150 may further include an optical coupling element 153 configured to couple together the third primary light emitted by the first LED light source 151a and the third primary light emitted by the second LED light source 151b. For example, the optical coupling element 153 may be a dichroic mirror which can allow the third primary light of a first wavelength to transmit through and reflect the third primary light of a second wavelength. As shown in FIG. 6, after being collimated by the third lens and the fourth lens, the third primary light provided by the first LED light source 151a exits through the optical coupling element 153; and after being collimated by the third lens and the fourth lens, the third primary light provided by the second LED light source 151b exits after being reflected through the optical coupling element 153. It should be noted that the optical coupling element 153 may also be other applicable optical elements, which is not limited in this embodiment.

When the projection illumination apparatus 10 provided in this embodiment is applied to a projection device with a single light valve, the first primary light, the second primary light and the third primary light provided by the projection illumination apparatus 10 irradiate on the same light valve 20 in a time-sharing manner, so as to realize color picture display by means of time color mixing. At this time, the second light source assembly 150 is configured to output the third primary light in a third illumination time period. The third illumination time period is different from the first illumination time period and the second illumination time period. The first illumination time period, the second illumination time period and the third illumination time period are illumination time of the first primary light, illumination time of the second primary light and illumination time of the third primary light in a scanning cycle for each frame of image scanned, respectively. It should be noted that a sequential order of the first illumination time period, the second illumination time period and the third illumination time period is not limited in this embodiment. During actual use, it needs to be set in combination with a driving sequence of the corresponding light valve 20, so that the light of three primary colors irradiates on the same light valve 20 successively according to a corresponding control sequence.

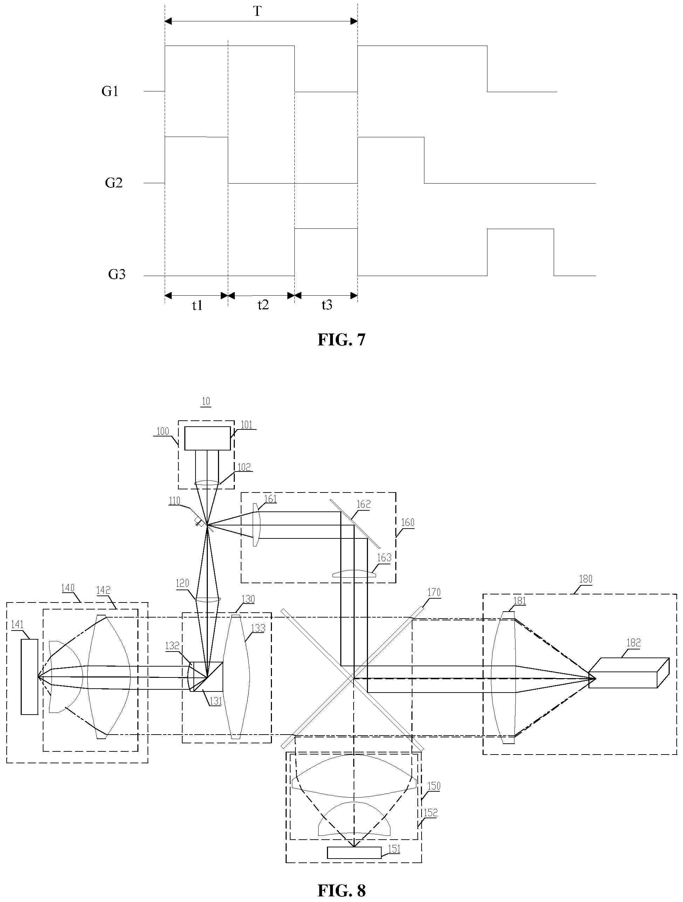

For example, FIG. 7 shows a control sequence diagram of the projection illumination apparatus 10. In FIG. 7, G1 represents a switching control signal of a laser light source 101, which is turned on at a high level and off at a low level; G2 represents a control signal of the time-sharing dimming assembly 110, which controls the first primary light to be transmitted to the first optical output channel at a high level, and controls the first primary light to be transmitted to the second optical output channel at a low level; and G3 represents a switching control signal of an LED light source, which is turned on at a high level and off at a low level. T represents an illumination cycle corresponding to a frame of color image, t1 represents the first illumination time period, t2 represents the second illumination time period, and t3 represents the third illumination time period. It should be noted that the control sequence diagram shown in FIG. 7 is only for illustration and is not used as a limitation, and is configured in combination with a driving sequence of the light valve 20 according to actual demands.

When the projection illumination apparatus 10 provided in this embodiment is applied to a projection device with dual light valves, the first primary light and the second primary light provided by the projection illumination apparatus 10 may irradiate on the same light valve 20 in a time-sharing manner, and the third primary light irradiates on the other light valve 20. At this time, there may be an overlap between the illumination time period of the third primary light and the first illumination time period as well as the second illumination time period, which needs to be set in combination with a driving sequence of the corresponding light valve 20, which is not limited in this embodiment.

By taking the projection illumination apparatus 10 being applied to the projection device with the single optical valve 20 as an example, in order to facilitate directing the three primary light output by the projection illumination apparatus 10 to the same optical valve 20 in a time-sharing manner, optical path coupling may be performed on the first primary light, the second primary light and the third primary light which are used as the illumination light beams in a time-sharing manner. For example, the projection illumination apparatus 10 may further include a loop mirror group 160 and a crossed flat coupler 170 (X-Plate).

The loop mirror group 160 is configured to guide the first primary light output from the time-sharing dimming assembly 110 as an illumination light beam to the crossed flat coupler 170. For example, the loop mirror group 160 may include a third collimating lens 161, a reflecting mirror 162, and a fourth collimating lens 163. At this time, after the first primary light as the illumination light beam is collimated by the third collimating lens 161 and reflected by the reflecting mirror 162, an optical path of the first primary light deflects and the first primary light is then incident on the crossed flat coupler 170 after being collimated by the fourth collimating lens 163 again.

The crossed flat coupler 170 includes a first flat coupler and a second flat coupler which are crossed each other. Both the first flat coupler and the second flat coupler allow the second primary light to transmit through. The first flat coupler can reflect the first primary light and allow the third primary light to transmit through, while the second flat coupler can reflect the third primary light and allow the first primary light to transmit through, thereby realizing optical path coupling among the first primary light, the second primary light and the third primary light.

Therefore, the first primary light incident on the crossed flat coupler 170 is output after being reflected by the first flat coupler. The second primary light output as the illumination light beam is output through the first flat coupler and the second flat coupler. The third primary light provided by the second light source assembly 150 is output after being reflected by the second flat coupler.

Further, the projection illumination apparatus 10 provided by this embodiment of the present disclosure may further include a light homogenizing element 180. The light homogenizing element 180 is disposed at a light exit side of the crossed flat coupler 170. The first primary light, the second primary light and the third primary light which are output by the crossed flat coupler 170 successively are all output after being subjected to light field homogenization by the light homogenizing element 180, so as to evenly irradiate on the corresponding light valve 20. For example, as shown in FIG. 2, the light homogenizing element 180 may be a compound eye lens array. Alternatively, as shown in FIG. 8, the light homogenizing element 180 may also include a third focusing lens 181 and a light rod 182. At this time, the first primary light, the second primary light and the third primary light output by the crossed flat coupler 170 successively are converged into the light rod 182 through the third focusing lens 181, thereby realizing light field homogenization.

In order to understand the technical solutions provided by the present disclosure more clearly, by taking the first primary light being blue laser, the second primary light being green light, and the third primary light being red light as an example, the working process of the projection illumination apparatus 10 is illustrated below according to the embodiment shown in FIG. 2.

A blue laser beam provided by the laser light source 101 is focused to the time-sharing dimming assembly 110 after being converged by the first focusing lens 102. In the first illumination time period, the time-sharing dimming assembly 110 outputs an incident blue laser beam to the loop mirror group 160, and the blue laser beam is collimated through the loop mirror group 160 and then transmitted to the crossed flat coupler 170, reflected to the light homogenizing element 180 through the crossed flat coupler 170, and subjected to light field homogenization, and then irradiates on the light valve 20 as a projection illumination light beam in the first illumination time period, so as to form a blue sub-image on a projection screen.

In the second illumination time period, the time-sharing dimming assembly 110 transmits the incident blue laser beam to the first focusing lens 102, and the blue laser beam is converged to the reflecting element 131 through the first focusing lens 102. The blue laser beam reflected by the reflecting element 131 is collimated by the first collimating lens 132, and then converged to the fluorescence generator 141 through the fluorescence collimating lens group 142. The fluorescence generator 141 generates a green light beam under excitation of blue laser. After the green light beam is collimated by the fluorescence collimating lens group 142, a part of the green light beam, which is not occluded by the reflecting element 131, is transmitted to the crossed flat coupler 170 after being collimated by the second collimating lens 133, incident on the light homogenizing element 180 through the crossed flat coupler 170 and subjected to light field homogenization by the light homogenizing element 180, and irradiates on the light valve 20 as a projection illumination light beam in the second illumination time period so as to form a green sub-image on the projection screen.

In the third illumination time period, the LED light source provides a red light beam; and the red light beam is collimated by the LED collimating lens group and then incident on the crossed flat coupler170, reflected to the light homogenizing element 180 through the crossed flat coupler 170, and subjected to light field homogenization by the light homogenizing element 180, and then irradiates on the light valve 20 as a projection illumination light beam in the third illumination time period so as to form a red sub-image on the projection screen. Therefore, time color mixing is performed by using the visual inertia of the human eyes to achieve color image display.

In the above-mentioned process, a blue illumination light beam is provided by the laser light source 101, the green illumination light beam is provided by green fluorophor 141 under excitation of the blue light laser, and the red illumination light beam is provided by the LED light source, which is conducive to ensuring the color image quality and inhibiting a speckle effect.

As would be appreciated by those of ordinary skill in the art, any of the embodiments discussed above is only exemplary and is not intended to imply that the scope of the present disclosure is limited to these embodiments. Under the concept of the present disclosure, the above embodiments or technical features of different embodiments may be combined, the steps may be performed in an arbitrary order, and there exist many other alterations for the above-described present disclosure in different aspects. For simplicity, these modified embodiments are not described in detail here.

Although exemplary embodiments of the present disclosure have been described, those embodiments may be changed or modified additionally once the basic inventive concepts are known to those skilled in the art. Therefore, the attached claims are intended to be construed to include the exemplary embodiments and all changes and modifications that fall within the scope of the present disclosure.

An embodiment of the present disclosure provides a projection illumination apparatus. The projection illumination apparatus includes a first light source assembly, a time-sharing dimming assembly and a fluorescence generation assembly.

The first light source assembly is configured to provide first primary light.

The time-sharing dimming assembly is configured to output the first primary light as the illumination light beam in a first illumination time period and transmit the first primary light to the light guide assembly in a second illumination time period, the first illumination time period and the second illumination time period being different time periods.

The light guide assembly includes a reflecting element configured to reflect the incident first primary light to the fluorescence generation assembly.

The fluorescence generation assembly is configured to output second primary light under excitation of the first primary light.

In an optional example, the first light source assembly includes a laser source and a first focusing lens. The first focusing lens is disposed on a light transmission path between the laser light source and the time-sharing dimming assembly and configured to converge the first primary light output by the laser light source. The time-sharing dimming assembly is disposed near a focal point of the first focusing lens.

In an optional example, the projection illumination apparatus further includes a second focusing lens. The second focusing lens is disposed on a transmission path of the first primary light between the time-sharing dimming assembly and the reflecting element, and configured to focus the first primary light transmitted from the time-sharing dimming assembly to the reflecting element onto a reflecting surface of the reflecting element.

In an optional example, the light guide assembly further includes a first collimating lens. The first collimating lens is disposed on a transmission path of the first primary light between the reflecting element and the fluorescence generation assembly, and the first primary light reflected by the reflecting element is transmitted to the fluorescence generation assembly after being collimated by the first collimating lens.

In an optional example, the light guide assembly further includes a second collimating lens. The second collimating lens is disposed on a side of the reflecting element away from the fluorescence generation assembly. The second primary light is output after being collimated by the second collimating lens.

In an optional example, the reflecting element is a reflecting prism. The reflecting prism includes a first surface and a second surface that are oppositely arranged. The first primary light reflected by the reflecting prism exits to the fluorescence generation assembly from the first surface. The first collimating lens is glued on the first surface, while the second collimating lens is glued on the second surface.

In an optional example, the time-sharing dimming assembly includes an optical path selection element and a driving mechanism.

The driving mechanism controls the movement of the optical path selection element, so that the first primary light selectively transmits through the optical path selection element or is reflected by the optical path selection element.

In an optional example, the optical path selection element may be a dimming element, and the driving mechanism is connected to the dimming element and configured to drive the dimming element to deflect.

When the dimming element is deflected to a first preset position, the first primary light provided by the first light source assembly is reflected by the dimming element to a first light outlet channel and output as an illumination light beam; and when the dimming element is deflected to a second preset position, the first primary light provided by the first light source assembly transmits through the dimming element into a second light outlet channel so as to be further transmitted to a fluorescence generator.

In an optional example, a refractive index of a material for the dimming element is greater than that of air. When the dimming element is deflected to the first preset position, an incident angle of the first primary light on a rear surface of the dimming element is greater than a critical angle of total reflection and less than 90 degrees. When the dimming element is deflected to the second preset position, the incident angle of the first primary light on the rear surface of the dimming element is greater than or equal to 0 degree and less than the critical angle of total reflection. The rear surface of the dimming element is a surface away from the first light source assembly. The critical angle of total reflection is a critical angle at which total reflection occurs when the first primary light enters the air from the rear surface.

In an optional example, the optical path selection element may be a rotary dimming wheel. The rotary dimming wheel has a transmission region and a reflection region.

When the reflection region of the rotary dimming wheel rotates to an incident position of the first primary light, the first primary light provided by the first light source assembly is reflected through the reflection region and then output as an illumination light beam.

When the transmission region of the rotary dimming wheel rotates to the incident position of the first primary light, the first primary light provided by the first light source assembly is transmitted to the reflecting element through the transmission region.

In an optional example, the projection illumination apparatus further includes a loop mirror group, a crossed flat coupler, a second light source assembly (150), and a light homogenizing element configured to homogenize a light field.

The first primary light output as the illumination light beam is collimated and reflected by the loop mirror group, then incident on the crossed flat coupler, and then reflected to the light homogenizing element through the crossed flat coupler.

The second primary light output as the illumination light beam is transmitted to the light homogenizing element through the crossed flat coupler.

The second light source assembly is configured to provide third primary light in a third illumination time period, such that the third primary light is reflected by the crossed flat coupler to the light homogenizing element, the third illumination time period being different from the first illumination time period and the second illumination time period.

In an optional example, the first primary light is blue laser, the second primary light is green light, and the third primary light is red light.

In an optional example, the fluorescence generation assembly includes a fluorescence collimating lens group and a fluorescence generator, wherein the fluorescence collimating lens group is configured to converge the incident first primary light to the fluorescence generator and collimate the second primary light generated by the fluorescence generator under excitation of the first primary light.

In an optional example, the fluorescence generator may be green ceramic fluorophor or an omnidirectional green fluorophor wheel.

Another embodiment of the present disclosure provides a projection device. The projection device includes a light valve, a projection lens, and the projection illumination apparatus as described above. The first primary light, the second primary light and the third primary light output by the projection illumination apparatus irradiate on a screen through the light valve and the projection lens to display a color image.

## Claims

1. A projection illumination apparatus, comprising a first light source assembly (100), a time-sharing dimming assembly (110), a light guide assembly (130) and a fluorescence generation assembly (140), wherein
the first light source assembly (100) is configured to provide first primary light;
the time-sharing dimming assembly (110) is configured to output the first primary light as an illumination light beam in a first illumination time period and transmit the first primary light to the light guide assembly (130) in a second illumination time period, the first illumination time period and the second illumination time period being different time periods;
the light guide assembly (130) comprises a reflecting element (131) configured to reflect incident first primary light to the fluorescence generation assembly (140); and
the fluorescence generation assembly (140) is configured to output second primary light under excitation of the first primary light.

2. The projection illumination apparatus according to claim 1, wherein the first light source assembly (100) comprises a laser source (101) and a first focusing lens (102); the first focusing lens (102) is disposed on a light transmission path between the laser light source (101) and the time-sharing dimming assembly (110), and configured to converge the first primary light output by the laser light source (101); and the time-sharing dimming assembly (110) is disposed near a focal point of the first focusing lens (102).

3. The projection illumination apparatus according to claim 1 or 2, further comprising a second focusing lens (120), wherein the second focusing lens (120) is disposed on a transmission path of the first primary light between the time-sharing dimming assembly (110) and the reflecting element (131), and configured to focus the first primary light transmitted from the time-sharing dimming assembly (110) to the reflecting element (131) onto a reflecting surface of the reflecting element (131).

4. The projection illumination apparatus according to any one of claims 1 to 3, wherein the light guide assembly (130) further comprises a first collimating lens (132); the first collimating lens (132) is disposed on a transmission path of the first primary light between the reflecting element (131) and the fluorescence generation assembly (140); and the first primary light reflected by the reflecting element (131) is transmitted to the fluorescence generation assembly (140) after being collimated through the first collimating lens (132).

5. The projection illumination apparatus according to claim 4, wherein the light guide assembly (130) further comprises a second collimating lens (133); the second collimating lens (133) is disposed on a side of the reflecting element (131) away from the fluorescence generation assembly (140); and the second primary light is output after being collimated by the second collimating lens (133).

6. The projection illumination apparatus according to claim 5, wherein the reflecting element (131) is a reflecting prism; the reflecting prism comprises a first surface and a second surface that are oppositely arranged; the first primary light reflected by the reflecting prism exits to the fluorescence generation assembly (140) from the first surface; the first collimating lens (132) is glued on the first surface; and the second collimating lens (133) is glued on the second surface.

7. The projection illumination apparatus according to any one of claims 1 to 6, wherein the time-sharing dimming assembly (110) comprises an optical path selection element and a driving mechanism, wherein
the driving mechanism controls the movement of the optical path selection element, so that the first primary light selectively transmits through the optical path selection element or is reflected by the optical path selection element.

8. The projection illumination apparatus according to claim 7, wherein the optical path selection element is a dimming element, and the driving mechanism is connected to the dimming element (111) and configured to drive the dimming element (111) to deflect; and
when the dimming element (111) is deflected to a first preset position, the first primary light provided by the first light source assembly (100) is reflected by the dimming element (111) to a first light outlet channel and output as an illumination light beam; and when the dimming element (111) is deflected to a second preset position, the first primary light provided by the first light source assembly (100) transmits through the dimming element (111) into a second light outlet channel so as to be further transmitted to a fluorescence generator (141).

9. The projection illumination apparatus according to claim 8, wherein a refractive index of a material for the dimming element (111) is greater than that of air; when the dimming element (111) is deflected to the first preset position, an incident angle of the first primary light on a rear surface of the dimming element (111) is greater than a critical angle of total reflection and less than 90 degrees; and when the dimming element (111) is deflected to the second preset position, the incident angle of the first primary light on the rear surface of the dimming element (111) is greater than or equal to 0 degree and less than the critical angle of total reflection, wherein the rear surface of the dimming element (111) is a surface away from the first light source assembly (100), and the critical angle of total reflection is a critical angle at which total reflection occurs when the first primary light enters the air from the rear surface.

10. The projection illumination apparatus according to claim 7, wherein the optical path selection element may be a rotary dimming wheel (112), and the rotary dimming wheel (112) has a transmission region and a reflection region;
when the reflection region of the rotary dimming wheel (112) rotates to an incident position of the first primary light, the first primary light provided by the first light source assembly (100) is reflected through the reflection region and then output as an illumination light beam; and
when the transmission region of the rotary dimming wheel (112) rotates to the incident position of the first primary light, the first primary light provided by the first light source assembly (100) is transmitted into the reflecting element (131) through the transmission region.

11. The projection illumination apparatus according to any one of claims 1 to 10, further comprising a loop mirror group (160), a crossed flat coupler (170), a second light source assembly (150), and a light homogenizing element (180) configured to homogenize a light field, wherein
the first primary light output as the illumination light beam is collimated and reflected by the loop mirror group (160), then incident on the crossed flat coupler (170), and then reflected to the light homogenizing element (180) through the crossed flat coupler (170);
the second primary light output as the illumination light beam is transmitted to the light homogenizing element (180) through the crossed flat coupler (170); and
the second light source assembly (150) is configured to provide third primary light in a third illumination time period, such that the third primary light is reflected by the crossed flat coupler (170) to the light homogenizing element (180), the third illumination time period being different from the first illumination time period and the second illumination time period.

12. The projection illumination apparatus according to any one of claims 1 to 11, wherein the first primary light is blue laser, the second primary light is green light, and the third primary light is red light.

13. The projection illumination apparatus according to any one of claims 1 to 12, wherein the fluorescence generation assembly (140) comprises a fluorescence collimating lens group (142) and a fluorescence generator (141), wherein the fluorescence collimating lens group (142) is configured to converge the incident first primary light to the fluorescence generator (141) and collimate the second primary light generated by the fluorescence generator (141) under excitation of the first primary light.

14. The projection illumination apparatus according to claim 13, wherein
the fluorescence generator (141) is green ceramic fluorophor or an omnidirectional green fluorophor wheel.

15. A projection device, comprising:
the projection illumination apparatus according to any one of claims 1 to 14;
a light valve; and
a projection lens, wherein
the first primary light, the second primary light and the third primary light output by the projection illumination apparatus irradiate on a screen through the light valve and the projection lens to display a color image.
